# EUROPEAN PATENT APPLICATION

(11) **EP 1 280 312 A2**
(43) Date of publication of application: **29.01.2003**
(21) Application number: 02014259.2
(22) Date of filing: 26.06.2002
(51) Int. Cl.: H04L 29/06

(54) **Methods, systems and computer program products for checking the validity of data**

(30) Priority: 28.06.2001 JP 2001195688; 27.05.2002 JP 2002151711
(71) Applicant: Hitachi, Ltd., Chiyoda-ku, Tokyo 101-8010 (JP)
(72) Inventor: Aoshima, Hirokazu, Hitachi Ltd, Intel. Prop. Group, Chiyoda-ku, Tokyo 100-8220 (JP); Yoshiura, Hiroshi, Hitachi Ltd, Intel. Prop. Group, Chiyoda-ku, Tokyo 100-8220 (JP); Ugajin, Atsushi, Hitachi Ltd., Intel. Prop. Group, Chiyoda-ku, Tokyo 100-8220 (JP); Kamada, Eiichi, Hitachi, Ltd., Intel. Prop. Group, Chiyoda-ku, Tokyo 100-8220 (JP); Watanabe, Naoki, Hitachi, Ltd., Intel. Prop. Group, Chiyoda-ku, Tokyo 100-8220 (JP)
(74) Representative: Strehl Schübel-Hopf & Partner

(57) **Abstract**

Techniques are provided which can prevent secret data or falsified data in a data providing system (102) from being presented to a data requesting system (100). A data verifying system (101) is installed in a network interconnecting the data requesting system and data providing system. The data verifying system checks whether verification data for supplied data matches the supplied data. In accordance with this check, data to be transmitted from the data verifying system to the data requesting system is altered.

## Description

### BACKGROUND OF THE INVENTION

The present invention relates to a data verification method for verifying data, and more particularly to techniques suitable for application to a data verification system which checks any substitution of data transmitted from a Web server in the WWW (World Wide Web) system.

Data transmission in the WWW system is prevailing. Many accidents have been reported such as substitution of data publicized by a Web server in the WWW system through illegal intrusion into the Web server, and publication of secret data through inadvertent registration of the data in a Web server. Such accidents lower the reliability of data publicized by a Web server so that reputation of an enterprise, an organization or the like publicizing data on the Web server may be damaged greatly.

Techniques are known which periodically monitor the data publicized by a Web server to find any substitution, as disclosed, for example, in an Official Gazette "Method and Device for Correcting Forgery and Forgery Discriminating Device" of JP-A-11-154139. According to the outline of the techniques, contents disclosed in a network at a predetermined location are acquired periodically and judged each time whether the contents were falsified or not.

"MONITORING INTEGRITY OF TRANSMITTED DATA" (PCT/IL99/00203) pertains to techniques of guaranteeing the reliability of data.

If data publicized by a Web server is falsified or secret data is publicized, reputation of an organization, an enterprise or the like may be damaged. Even if data is periodically monitored, substitution or secret data outflow during the idle period between monitor operations cannot be prevented.

### SUMMARY OF THE INVENTION

The invention provides techniques of preventing falsified data or secret data from being supplied to a data requesting system.

More specifically, the invention provides a data verifying system to execute the following steps:

A request receiving step is provided so that the data verifying system can acquire verification data based on which the supplied data is verified.

A verification data acquiring step is provided so that a verification data is acquired as the basis for verifying the provided data.

A request transmitting step and a data receiving step are provided so that the data verifying system can acquire data requested by the data requesting system from the data providing system in behalf of the data requesting system. Since the data requesting system does not acquire the data directly, the data verifying system can perform a verification process before the data is transmitted to the data requesting system.

A data verifying step is provided for verification of the data acquired from the data providing system by using the verification data.

If the data verifying step confirms the validity of the supplied data by using the verification data, a data transmitting step transmits the data requested by the data requesting system to the data requesting system.

Confirmation of the validity means that the verification result indicates that the supplied data is the requested data.

The verification data contains data capable of verifying that the supplied data corresponding to an identifier was not falsified so that a presence/absence of substitution of the supplied data can be verified.

According to one aspect of the prevent invention, there is provided a data verifying method for a data verifying system for verifying data to be transmitted from a data providing system in response to a request, the method comprising: a request receiving step of receiving a data request including an identifier of the data from a data requesting system; a verification data acquiring step of acquiring verification data in accordance with the identifier; a request transmitting step of transmitting a supply request for the requested data to the data providing system in response to the received request; a data receiving step of receiving the supplied data transmitted from the data providing system in response to the supply request; a data verifying step of verifying the supplied data received at the data receiving step in accordance with the verification data; and a data transmission controlling step of controlling data transmission to the data requesting system in accordance with a verification result at the data verifying step.

The verification data acquired in accordance with the identifier contains data capable of verifying that the supplied data was not falsified.

The data verifying step is a step of judging whether the supplied data is the requested data, and the data transmission controlling step includes a step of transmitting the supplied data if the verification result indicates that the supplied data is the requested data, and not transmitting the supplied data if the verification result indicates that the supplied data is different from the requested data.

The data transmitting step further includes a step of transmitting notice data for notifying that the requested data cannot be transmitted, if the verification result indicates that the supplied data is different from the requested data.

The data transmitting step further includes a step of transmitting substitute data for the requested data, if the verification result indicates that the supplied data is different from the requested data.

The verification data contains information for verifying related data to be verified along with the supplied data to be transmitted and corresponding to the identifier.

The data receiving step further includes a related data acquiring step of receiving the related data to be verified along with the supplied data from the data providing system, the data verifying step further includes a step of verifying the related data in accordance with the verification data, and the data transmission controlling step includes a step of transmitting the supplied data if the related data is data to be acquired as the related data, and not transmitting the supplied data if the related data is different from data to be acquired as the related data.

The supplied data received from the data providing system is stored in correspondence with the identifier.

The supplied data is stored in correspondence with the identifier, if the verification result indicates that the supplied data is the requested data.

The request transmitting step is not executed if the stored supplied data satisfies a predetermined condition.

The related data is stored in correspondence with the identifier if the related data satisfies a predetermined condition.

The related data acquiring step is not executed if the stored related data satisfies a predetermined condition.

The data verifying step verifies the supplied data processed in a predetermined manner.

The supplied data processed in a predetermined manner has a predetermined portion of the supplied data removed.

A communication protocol for the data requesting system is different from a communication protocol for the data providing system.

Since the data transmitting step does not transmit supplied data if the data verifying step cannot confirm the validity of the supplied data, it is possible to prevent the supplied data from being transmitted to the data requesting system.

Alternatively, since the data transmitting step transmits data indicating that supplied data cannot be transmitted if the data verifying step cannot confirm the validity of the supplied data, it is possible to prevent the supplied data from being transmitted to the data requesting system and to notify the data requesting system and other systems on the network of the reason why the supplied data cannot be transmitted.

Alternatively, the data transmitting step replaces the supplied data by predetermined data which is in turn transmitted if the data verifying step cannot confirm the validity of the supplied data. The predetermined data may be a message apologizing inability of transmitting the supplied data. In this manner, at least falsified data or secret data can be prevented from being flowed to the external.

If the supplied data as well as the related data is verified, it is possible to stop transmission of the supplied data in case the related data was falsified.

The supplied data may be processed in a predetermined manner before the verification process.

A predetermined data portion of the supplied data may be removed to exclude this portion from the verification subject.

If the data verifying method is realized by a verifying system connected to a network and having two or more network connection units, the data requesting system and data providing system can communicate via the data verifying system. It is therefore possible for the data verifying system to relay a request of the data requesting system and data supplied from the data providing system.

The data verifying system may be provided with information necessary for cryptography possessed by the data providing system. In this case, the data verifying system deciphers the enciphered and transmitted data in accordance with the information necessary for cryptography and verifies the deciphered data.

The information necessary for cryptography may be a cipher key.

The cipher key may be a private key of public key cryptography.

The data verifying system may decipher enciphered and transmitted information by using the cipher key and store it to decipher data enciphered and transmitted thereafter by using the stored information.

If the verification result indicates that the supplied data is the requested data, the enciphered supplied data transmitted from the data providing system may be transmitted to the data requesting system.

If the verification result indicates that the supplied data is different from the requested data, notice data for notifying that the requested data cannot be transmitted may be enciphered in accordance with the information necessary for cryptography and transmitted.

If the verification result indicates that the supplied data is different from the requested data, substitute data for the requested data may be enciphered in accordance with the information necessary for cryptography and transmitted.

Other objects, features and advantages of the invention will become apparent from the following description of the embodiments of the invention taken in conjunction with the accompanying drawings.

### BRIEF DESCRIPTION OF THE DRAWINGS

Fig. 1 is a diagram showing an example of a network configuration including a data verifying system.
Fig. 2 is a diagram showing an example of the internal structure of a data verifying system.
Fig. 3 is a diagram showing an example of a process flow among a data requesting system, the data verifying system and a data providing system.
Fig. 4 is a diagram showing an example of HTML data displayed.
Fig. 5 is a diagram showing an example of displayed data when HTML data cannot be verified.
Fig. 6 is a diagram showing an example of displayed data when graphics data cannot be verified.
Fig. 7 is a diagram showing examples of verification data for verifying related data.
Fig. 8 is a diagram showing an example of an expanded data verifying process flow of verifying related data.
Fig. 9 is a diagram showing an example of a reception data cache table 900.
Fig. 10 is a diagram showing another example of a process flow among the data requesting system, data verifying system and data providing system.
Fig. 11 is a diagram showing an example of a network having a load distribution system.
Fig. 12 is a diagram showing another example of a process flow among the data requesting system, data verifying system and data providing system.
Fig. 13 is a diagram showing an example of a network configuration including a data management system.
Fig. 14 is a diagram showing another example of the network configuration including the data management system.
Fig. 15 is a diagram showing another example of the network configuration including the data management system.
Fig. 16 is a diagram showing another example of the network configuration including the data management system.

### DETAILED DESCRIPTION OF THE EMBODIMENTS

Embodiments of the invention will be described. The invention is not limited only to the embodiments which are given only for illustrative purposes.

### 1. First Embodiment

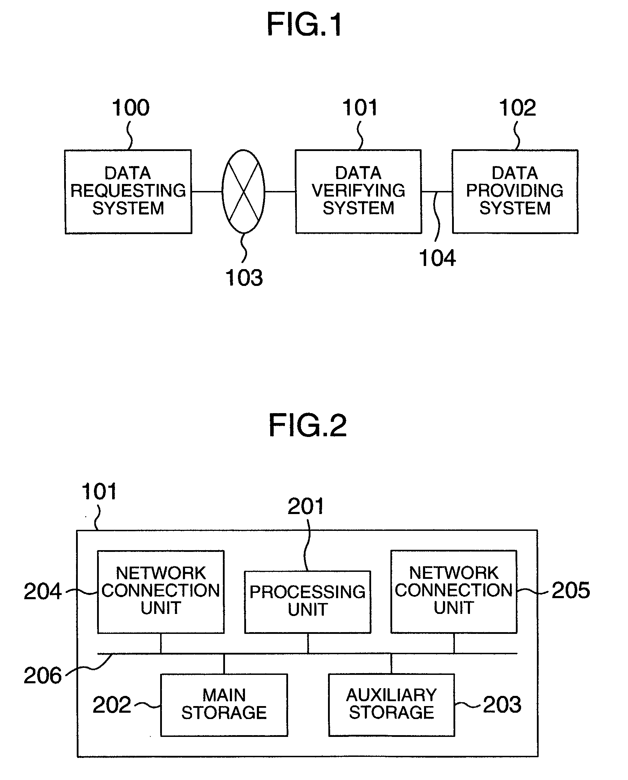

Fig. 1 is a schematic diagram showing a Web system to which an embodiment of the invention is applied.

Referring to Fig. 1, a data requesting system 100 is a computer on which software usually called a Web browser runs, for example, in accordance with HTTP (HyperText Transfer Protocol). Reference numeral 101 represents a data verifying system, and reference numeral 102 represents a data providing system. The data providing system 102 is a computer on which software usually called a Web browser runs, for example, in accordance with HTTP. A network 103 interconnects the data requesting system and data verifying system. The network may be a public network which can be accessed from other systems, for example, the Internet. Reference numeral 104 represents a network interconnecting the data verifying system and data providing system.

The data verifying system 101 can be realized by a computer having a general structure such as shown in Fig. 2. Referring to Fig. 2, the data verifying system 101 includes at least a processing unit 201 such as a CPU, a memory (main storage) 202 for storing data, an auxiliary storage 203 such as a hard disk, a network connection unit 204 and an internal communication line 206 such as a bus for interconnecting the above-described components. A plurality of network connection units 204 and 205 may be provided as shown in Fig. 2. The data verifying system performs various processes by reading a program stored in the auxiliary storage into the main storage and executing the program in the processing unit. This program may be read into the computer via a communication medium or a portable storage medium.

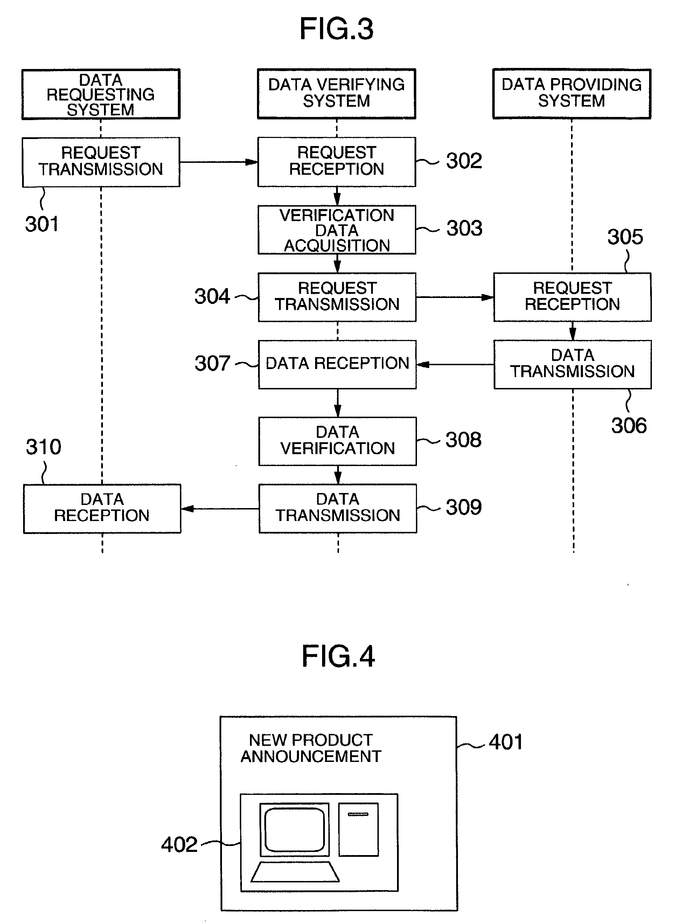

Fig. 3 is a diagram showing the outline process flow among the systems of this embodiment.

A user of the data requesting system issues a data request to the data verifying system at a request transmission step 301.

This request is issued by using a URL (Uniform Resource Locator) which is an identifier for requested data. This request is transmitted in accordance with HTTP.

At a request reception step 302, the data verifying system receives the request from the data requesting system. Since the request contains URL as the identifier for requested data or information capable of identifying URL, the data verifying system can know URL for the requested data from the received request.

Next, at a verification data acquisition step 303, in accordance with URL identified from the request received at the request reception step, the data verifying system acquires verification data. For example, the verification data may be a characteristic value of data to be transmitted from the data providing system corresponding to URL. More specifically, the characteristic value may be a hash value calculated by a hash function applied to requested data. The details of the hash function and hash value are well known by those skilled in the art.

For example, in acquiring the verification data, data representative of each pair of a URL and a hash value stored as a file in the auxiliary storage is searched by using URL identified at the request reception step.

Information other than URL may be used for acquiring the verification data.

Information obtained by processing URL in a predetermined manner may be used for acquiring the verification data.

The request received at the request reception step may contain an identifier of auxiliary information of the requested data. For example, the auxiliary information is information designating a particular location in the requested data or an argument to be given to a program for generating the requested data. This auxiliary information may be neglected at the verification step data acquisition step or at a data verification step to be described later.

The verification data may be acquired from a database system.

A server for providing the verification data may be used to acquire the verification data.

At a request transmission step 304, the data verification system transmits a request to the data providing system. This request is transmitted in accordance with URL identified from the received request at the request reception step.

Upon reception of the request at a step 305, the data providing system transmits the data corresponding to the received request to the data verifying system at a step 306.

At a data reception step 307, the data verifying system receives the data transmitted from the data providing system.

At a data verification step 308, the received data is verified to judge whether the received data is valid or not.

For example, for data verification, a judgment may be made whether a hash value obtained by subjecting the received data to a hash function is coincident with the hash value acquired as the verification data at the verification data acquisition step. If the data cannot be received at the data reception step, it may be judged at the data verification step that the data validity was not confirmed.

At a data transmission step 309, the data is transmitted to the data requesting system.

Whether the data is to be transmitted or not is judged from the results of the data verification step.

If the validity of data can be confirmed at the data verification step, the data received from the data providing system is transmitted to the data requesting system.

If the validity of data cannot be confirmed at the data verification step, the data is replaced by predetermined data which is in turn transmitted to the data requesting system.

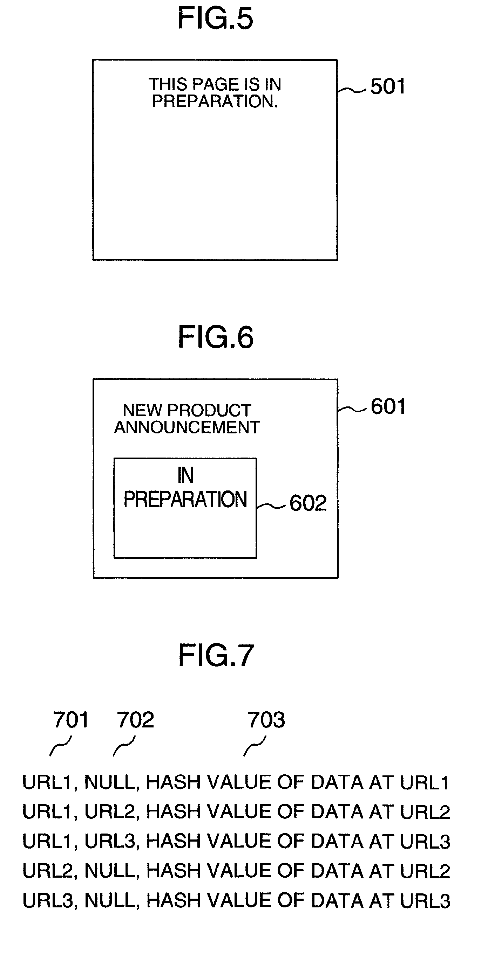

For example, if data is HTML data such as shown in Fig. 4, this data is replaced by HTML data such as shown in Fig. 5. Alternatively, if the validity of data cannot be confirmed at the data verification step, an HTTP status representative of inability of data transmission is transmitted. An HTTP status is represented by a status code of three digits. For example, a status code 404 is transmitted which indicates that requested data does not exist at a server and is unable to be transmitted.

Alternatively, the HTTP communications between the data requesting system and data verifying system may be disconnected.

With these processes, invalid data will not be transmitted.

In the above description, verification of HTML data is used by way of example. Similar processes may be performed for data of different types.

For example, if data is graphics data (such as indicated at 402 in Fig. 4) and if the validity of the data cannot be confirmed at the data verification step, the data is replaced by predetermined graphics data such as indicated at 602 in Fig. 6 which in turn is transmitted.

In this embodiment, the verification data is a hash value of data to be supplied, and verification is realized by comparing the verification data and the hash value calculated from the data acquired from the data providing system. Other verification is also possible. For example, the hash value of the verification data may be given an electronic signature. When verification is made, verification for the electronic signature is also made to confirm whether the hash value of the verification data was falsified or not.

The hash value may be enciphered and registered as the verification data. At the data verification step, the enciphered verification data is deciphered to recover the original hash value which is compared with the hash value calculated from the data acquired from the data providing system.

The verification step may include a step of processing data in a predetermined manner. For example, if the data acquired from the data providing system is a character string, a hash value calculated from a predetermined character string converted from another predetermined character string contained in the data may be used for hash value comparison. In this case, the hash value to be registered as the verification data is calculated also from the predetermined character string converted from the other predetermined character string contained in the data. More specifically, even if data request is for the same URL, if the data contains a changed portion, it may add a step of converting character strings between the character strings representative of the start and end of the changed portion into an empty character string.

The step of processing data in a predetermined manner may be selected in accordance with the data. As the selection criterion, URL of the data or the type of the data may be used.

Instead of a hash value, the data itself may be registered as the verification data. For verification, the registered data and the data acquired from the data providing system are compared to check their coincidence.

A particular process to be executed when the verification data cannot be acquired at the verification data acquisition step may be determined.

If the verification data cannot be acquired, it may be presumed that the validity of data was able to be confirmed at the data verification step. Alternatively, it may indicate explicitly that the validity of data was able to be confirmed at the data verification step. For example, a specific value distinguishable from a hash value is registered as the verification data, and if the data verification step uses this specific value, it may be regarded that the validity of data was able to be confirmed.

If the verification data cannot be acquired, it may be presumed that the validity of data was unable to be confirmed at the data verification step. In this case, the request transmission step and data reception step are not required to be performed.

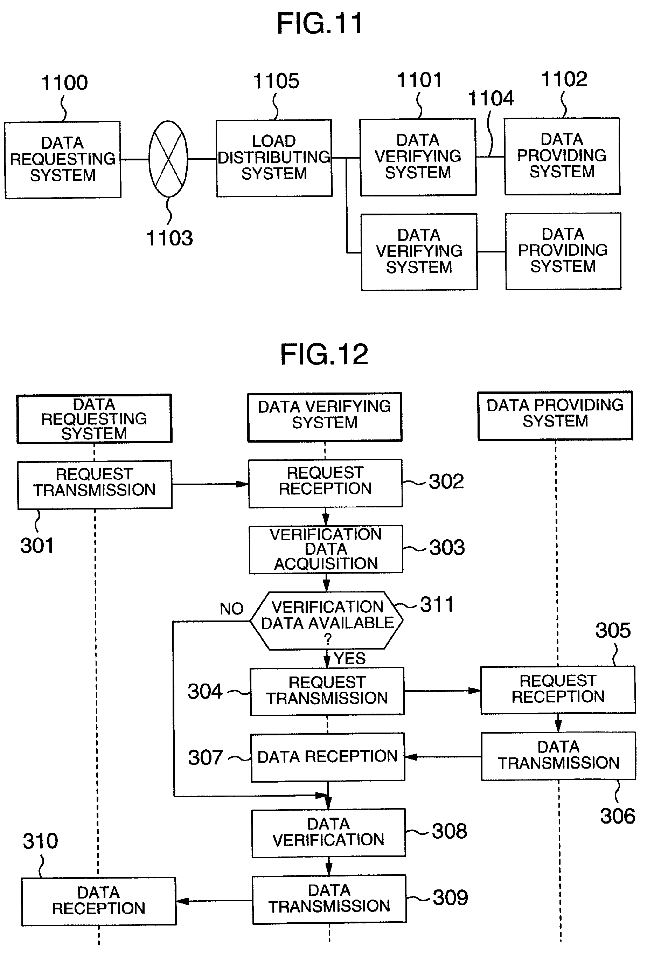

In this case, the processes shown in Fig. 12 are performed. At a verification data availability judgement step 311. it is judged whether the verification data can be acquired. If not acquired, the flow advances to the data verification step whereat it is presumed that the validity of data was unable to be confirmed.

A process of recording verification results in a log file may be added.

A process of notifying verification results to a predetermined administrator may be added depending upon the contents of the verification results. A process may be added which notifies an occurrence of validity confirmation failure by using an e-mail when the validity of data cannot be confirmed. The predetermined administrator may be an administrator of the data verifying system or a manager who bears the responsibility for management of data with validity confirmation failure. Instead of an e-mail or in addition to an e-mail, other notifying methods may be used.

In the above embodiment, the data verifying system and data providing system are different systems. However, a single system may be used, run on which are a program (hereinafter called a data verification program) for realizing the processes of the data verifying system and a program (hereinafter called a data provision program) for realizing the processes of the data providing system. In this case, the data requesting system transmits a request to the system running the data verification program and data provision program, and the data verification program receives the request.

The data verification program transmits a request to the data provision program.

The data provision program receives the request from the data verification program, and transmits data to the data verification program.

The data verification program receives the data from the data provision program, and transmits the data to the data requesting system.

The data requesting system receives the data from the data verification program.

The data verification system may concurrently execute a plurality of OS's so that one OS executes the above-described processes of the data verification system and a program running on another OS monitors whether the processes of the data verifying system are performed correctly.

The data verification system may concurrently execute a plurality of OS's and the processes of the data verification system are divided into at least two groups which are processed by at least two OS's.

For example, the processes of the data verifying system may be divided into an external communication process group and another process group including the verification step. These process groups are executed by different OS's in cooperation with each other so that transfer of only limited information is possible. Therefore, even if the external communication process of the data verifying system is illegally attacked via a network, an attack against the other process group including the verification step can be hindered.

The processes may be speeded up by parallel process operations of the data verifying system. For example, the verification data acquisition step 303 and the process group from the request transmission step 304 to the data reception step 307 may be executed in parallel.

The processes may be speeded up by predicting data to be requested from the data requesting system and by acquiring in advance data from the data providing system.

The verification data may be generated by the data verifying system.

A data managing system may be provided which registers verification data to be acquired at the verification data acquisition step. The data managing system may generate the verification data and registers it in the data verifying system.

The data managing system may store the verification data, and the verification data is acquired from the data managing system at the verification data acquisition step.

The data managing system may resister data in the data providing system.

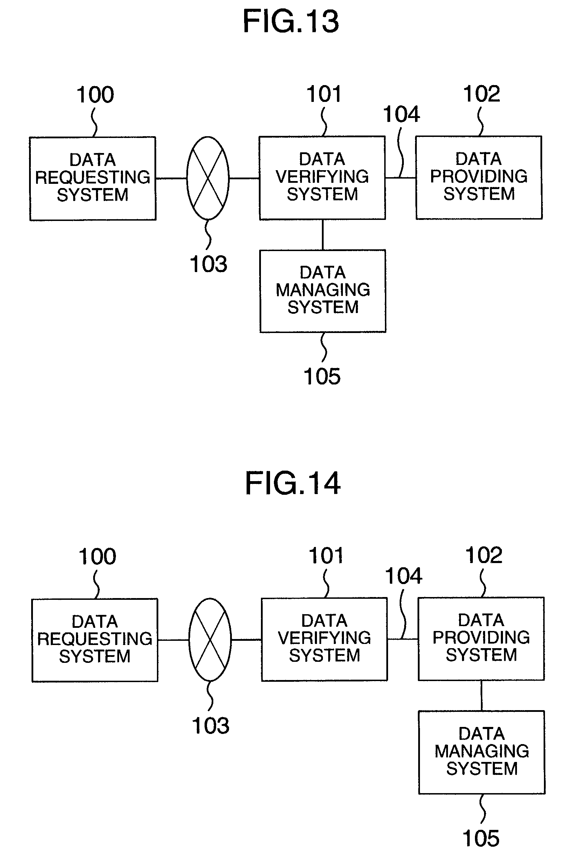

As shown in Fig. 13, the data managing system may be connected to the data verifying system to register data in the data providing system via the data verifying system.

As shown in Fig. 14, the data managing system may be connected to the data providing system to register data in the data verifying system via the data providing system.

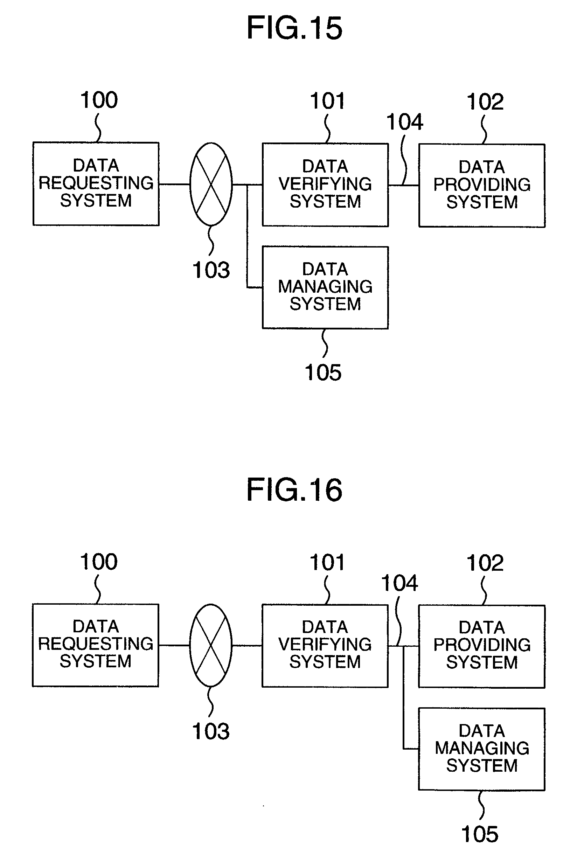

As shown in Fig. 15, the data managing system may be connected to the network 103 to register data in the data verifying system. In this case, data is registered in the data providing system via the data verifying system.

As shown in Fig. 16, the data managing system may be connected to the network 104 to store data in the data verifying system and data providing system via the network.

The networks 103 and 104 may include network instruments. For example, a network instrument such as a router and a firewall may be connected between the data verifying system and data requesting system.

The data verifying system may be managed by an administrator of the data providing system, by a third party different from administrators of the Web sites, or by a user of the data providing system.

A communication protocol between the data requesting system and data verifying system may be different from that between the data verifying system and data providing system. For example, the former communication protocol may be a protocol called HTTPS enciphered by a so-called SSL (Secure Socket Layer) method, and the latter communication protocol may be HTTP. A combination of communication protocols different from this may also be used.

An identifier used when the data requesting system requests data may be different from an identifier used when the data verifying system requests data from the data providing system. In this case, the data verifying system performs a transform process to absorb the difference between the identifiers.

More specifically, if the identifier is URL, it is sufficient if the data verifying system can transform URL contained in the request received at the data verifying system into URL of the data providing system. For example, the data verifying system transforms URL of http://sitel/index.html used when the data requesting system requests data into URL of http://site2/index.html to be used when the data verifying system requests data from the data providing system.

This transform process may be included in the request reception step or in the request transmission step.

A transform process of transforming URL to be used for acquiring verification data may be added to the verification data acquisition step, if the verification data is managed by URL after transform.

Since the data is requested basing upon this transform, a correspondence between the IP address of the data verifying system and the computer name (site1) contained in the URL http://site1/index.html to be used by the data requesting system is registered in an address resolver which resolves the IP address from the computer name. More specifically, a correspondence between the IP address of the verifying system and the computer name is registered in a DNS (Domain Name System).

Similarly, a correspondence between the IP address of the data providing system and the computer name (site2) contained in URL http://site2/index/html is registered. The data providing system is not required to resolve the IP address of the data providing system to be used for communications between the data verifying system and data providing system, but it is sufficient if the data verifying system resolves the IP address. The computer name site2 may be registered only in an address resolver accessible only by limited computers, among address resolvers for resolving an IP address from a computer name.

More specifically, a correspondence between the IP address and the computer name of the data providing system may be stored only in DNS accessible only by those systems connected to the network 104. Alternatively, the data verifying system itself may manage correspondences between computer names of data providing systems and IP addresses to realize a custom DNS. In this case, the data requesting system requests the data by using URL containing the computer name of the data verifying system. Since the data requesting system cannot resolve the IP address from the computer name of the data providing system, it cannot request data by designating the computer name of the data providing system.

Network settings for the data requesting system, data verifying system and data providing system may be made in such a manner that the same URL can be used without URL transform. In this case, a correspondence between the IP address of the data verifying system and the computer name contained in URL is stored in the address resolver to which the data requesting system refers, whereas a correspondence between the IP address of the data providing system and the computer name contained in URL is stored in the address resolver to which the data verifying system refers.

In both the cases that URL transform is necessary and it is unnecessary, the network interconnecting the data requesting system and data providing system as shown in Fig. 1 is established only through involvement of the data verifying system. It is therefore possible to prevent the data requesting system from acquiring data by bypassing the data verifying system.

Alternatively, instead of physical network configuration, logical connection by a network instrument such as a firewall may be used so that the network interconnecting the data requesting system and data providing system always involves the data verifying system.

The details of an address resolver for resolving an IP address from a computer name and the details of a network configuration are well known by those skilled in the art.

### 2. Second Embodiment

HTML data may have data related to base HTML data. For example, the HTML data shown in Fig. 4 has image data 402 as the related data to the base HTML data.

In Fig. 4, although the image data 402 is an in-line image of the base HTML data, the related data is not limited only to the in-line image but it may be any arbitrary data.

If the HTML data has related data, the related data as well as the HTML data can be verified.

To this end, it is necessary to have information indicating that which data is the related data of what base data. For example, if the verification data includes an identifier of related data to be verified along with an identifier of the data to be supplied, it is possible to know a presence/absence of the related data of the requested data and its identifier. Namely, the verification data includes a URL of the related data in correspondence with URL of the base HTML data.

A related data acquisition step and a related data verification step are added. In this case, if the requested data contains related data, whether the requested data can be transmitted is judged by verifying even the related data.

In this case, the verification data has the structure such as shown in Fig. 7.

Reference numeral 701 represents URL of base data, and reference numeral 702 represents URL of the related data corresponding to URL of the base data. Reference numeral 703 represents a hash value of the related data. If a predetermined value (e.g., NULL) is registered as URL of the related data, reference numeral 703 represents a hash value of the base data.

At the verification step, the data verification step and data provision step are expanded.

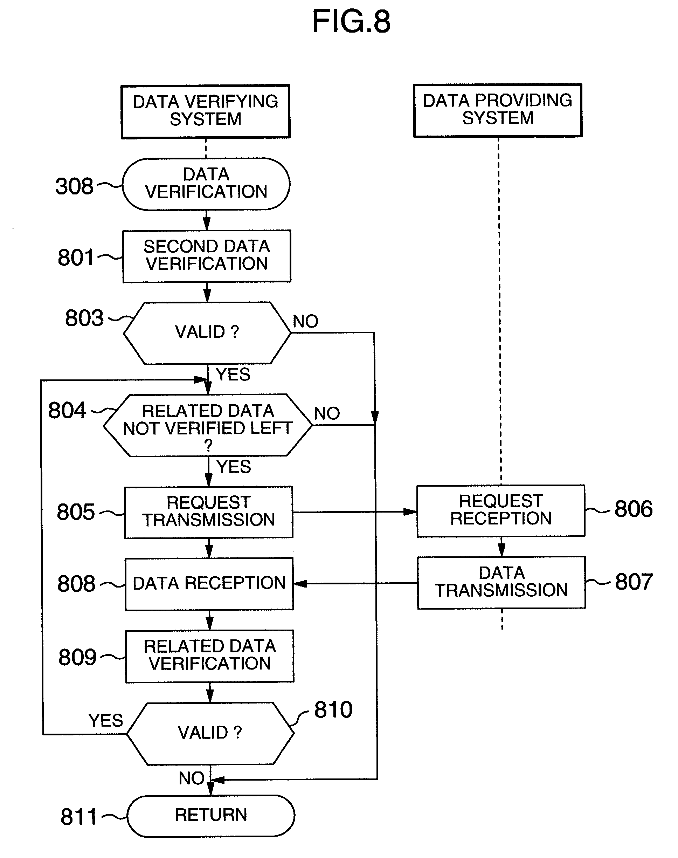

The data verification step 308 shown in Fig. 3 is expanded to the step shown in Fig. 8.

Similar to the data verification step 308 of the first embodiment, at a second data verification step 801, the received data is verified.

If the validity is confirmed, the flow advances from a step 803 to a step 804, whereas if not, the flow skips to a step 811.

At the step 804 it is judged whether there is related data to be verified.

This judgement step judges whether there is related data still not verified. If there is related data to be verified, the flow advances to a step 805, whereas if not, the flow skips to the step 811.

At a related data request transmission step 805, the data verifying system requests a piece of related data still not verified from the data providing system.

The data providing system receives this request (step 806) and transmits the requested data (step 807).

At a related data reception step 808, the data verifying system receives the related data to be verified.

At a related data verification step 809, the data verifying system verifies the related data received at the related data reception step 808.

A verifying method may be a judgement whether a hash value of a hash function applied to the received related data is coincident with a hash value corresponding to the related data among the verification data acquired at the verification data acquisition step.

If the validity is confirmed at the related data verification step, i.e., if the hash values are coincide, the flow returns from a step 810 to the step 804, whereas if the validity is not confirmed, i.e., if the hash values are not coincide, the flow advances to the step 811 and to the step 309.

If the validity is confirmed at both the second data verification step 801 and related data verification step 809, the data received from the data providing system is transmitted to the data requesting system at the data provision step 309.

If there is data whose validity was not confirmed at the second data verification step 801 or related data verification step 809, the data is replaced by predetermined data which is in turn transmitted to the data requesting system.

Alternatively, if there is data whose validity was not confirmed at the second data verification step 801 or related data verification step 809, similar to the first embodiment, HTTP communications between the data requesting system and data verifying system may be disconnected or an HTTP status may be transmitted.

At least one piece of the related data may be information capable of verifying the base data. For example, if one piece of the related data of the base data is image data, this image data may have the information capable of verifying URL of the base data having the image data as the related data.

The information of verifying the base data is not limited only to URL, but other data may be used such as a hash value corresponding to the base data, a data size, and an available period.

An electronic signature may be used for guaranteeing that the information capable of verifying the validity of base data was not falsified.

Accordingly, while the data verifying system verifies base data, the data requesting system can also verify the validity of the base data in accordance with the received base data and the related data corresponding to the information capable of verifying the validity of the base data.

### 3. Third Embodiment

In the third embodiment, a response speed is increased by temporarily storing data received from the data providing system in the data verifying system of the second embodiment.

The request transmission step 304, data reception step 307 and data verification step 308 shown in Fig. 3 are expanded.

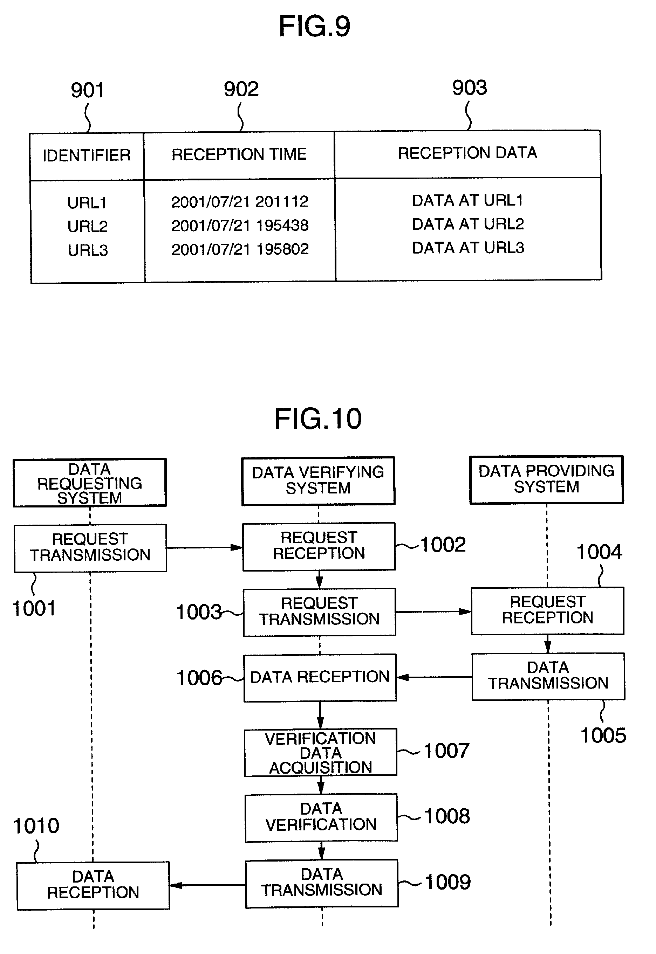

The data verifying system is provided with a reception data cache table 900 shown in Fig. 9 for storing data received from the data providing system in correspondence with an identifier and a reception time.

At the request transmission step 304, it is checked whether the data to be requested from the data providing system exists in the reception data cache table 900. If the data does not exist or if the reception time of the data in the table is older than a predetermined time, the data request is transmitted to the data providing system. If the proper data exists in the reception data cache table 900, the flow advances to the data reception step 307 without transmitting the data request.

At the data reception step 307, it is checked whether the data to be requested from the data providing system exists in the reception data cache table 900.

If the data does not exist or if the reception time of the data in the table is older than the predetermined time, the data is received from the data providing system.

If the data exists in the reception data cache table 900, the data in the reception data cache table 900 is passed to the data verification step 308 without receiving the data.

The expansion of the data verification step 308 will be described with reference to Fig. 8.

At the second data verification step 801, data is verified. If the data is received from the data providing system and the validity of the data is confirmed from the verification data, the data along with URL as the identifier of the data and a reception time are registered in the reception data cache table 900.

Similar to the request transmission step 304, at the related data request transmission step 805 it is checked whether the data to be requested from the data providing system exists in the reception data cache table 900. If the data does not exist or if the reception time of the data in the table is older than the predetermined time, the data request is transmitted to the data providing system. If the proper data exists in the reception data cache table 900, the flow advances to the related data reception step 808 without transmitting the data request.

At the data reception step 808, similar to the data reception step 307, it is checked whether the data to be requested from the data providing system exists in the reception data cache table 900.

If the data exists in the table and the reception time of the data is newer than the predetermined time, the data in the reception data cache table 900 is passed to the related data verification step 809 without transmitting the data request to the data providing system. Under the conditions other than the above-described conditions, the data is received from the data providing system. By not receiving the data, the process of receiving the data from the data providing system can be omitted so that a load of processes can be reduced.

At the related data verification step 809, the related data acquired at the related data reception step is verified. If the related data is received from the data providing system and the validity of the related data is confirmed from the verification data, the related data along with URL as the identifier of the related data and a reception time are registered in the reception data cache table 900. Other processes are similar to the second embodiment.

The verification results may be stored. In this case, after data at one URL is once verified, the verification of the data at this URL is not performed during a predetermined period but the stored verification results are utilized.

If the identifier to be used when the data requesting system requests data is different from the identifier to be used when the data verifying system requests data from the data providing system, an identifier transform process may be used when data registration or data reference of the reception data cache table 900 is performed, depending upon which one of the identifiers is related to an identifier of reception data in the table 900.

### 4. Fourth Embodiment

Similar to the first embodiment, the fourth embodiment uses the Web system whose outline is shown in Fig. 1 and the data verifying system whose outline is shown in Fig. 2.

In this embodiment, the processes by each system and data transfer between systems are briefly illustrated in Fig. 10. The different point from the first embodiment resides in that in the data verifying system, after a data reception step 1006, a verification data acquisition step 1007 is performed and thereafter a data verification step 1008 is performed.

Similar to the first embodiment, at the verification acquisition step, the verification data corresponding to a received request may be acquired from a database, or a combination of the second and third embodiments may be incorporated.

In a modification of this embodiment, received data contains verification data for verifying the received data. At the verification data acquisition step, the verification data is acquired from the received data. For example, the received data has an electronic signature, and at the verification data acquisition step, the electronic signature is acquired from the received data.

The data verification step verifies the received data by using the electronic signature used as the verification data.

The details of acquiring an electronic signature from data and verifying the data by using the electronic signature are well known by those skilled in the art.

### 5. Fifth Embodiment

In the fifth embodiment, as shown in Fig. 11, a load distributing system 1105 is installed in a network interconnecting a data requesting system 1100 and data verifying systems 1101. The load distributing system is connected to a plurality of data verifying systems 1101 connecting data providing systems 1102.

Upon reception of a request from the data requesting system, the load distributing system transfers this request to one of the data verifying systems in accordance with a predetermined criterion. Upon reception of data from the data verifying system, the load distributing system transfers the data to the data requesting system.

When predetermined data is received from the data verifying system in response to a request, this request is re-transferred to another data verifying system in accordance with a predetermined criterion. The details of the load distributing system are well known by those skilled in the art.

The data verifying system is different from the data verifying system of the first embodiment in the following two points.

A request is received not from the data requesting system but from the load distributing system, and data is transmitted not to the data requesting system but to the load distributing system. If the validity of data cannot be confirmed at the data verification step, the load distributing system transmits request re-transfer condition data to another data verifying system.

For example, of the data which is transmitted when the validity cannot be confirmed in the first embodiment, the data matching the judgement criterion of the load distributing system is transmitted.

One example of such data is an HTTP status indicating that the data cannot be transmitted.

The details of the type of data to be transmitted when the validity cannot be confirmed are well known by those skilled in the art of load distributing systems.

### 6. Sixth Embodiment

In this embodiment, enciphered data is transmitted from the data providing system to the data requesting system. Although a cipher system by SSL is used by way of example, other cipher systems may also be used.

Similar to the first embodiment, the sixth embodiment uses the Web system whose outline is shown in Fig. 1 and the data verifying system whose outline s shown in Fig. 2. Different points from the first embodiment reside in that the data verifying system performs an cipher parameter process prior to the data transmission request, the data verifying system receives enciphered data and deciphers and verifies it, and the data verifying system transmits enciphered data.

In SSL, cipher parameters are exchanged before the start of cipher communication. This is generally called hand shaking. During hand shaking, the data providing system and data requesting system each generate a random number to transmit it to the partner.

A public key certificate of the data providing system is transmitted to the data requesting system.

The data requesting system transmits a numerical value based on which a cipher key for the cipher system is calculated. This numerical value is transmitted after it is enciphered by the public key of the data providing system. Therefore, the numerical value is transmitted in a secret state from others excepting the data providing system having a private key corresponding to the public key.

In order to perform a verification process in cipher communications, the data verifying system has the private key corresponding to the public key, stores cipher parameters exchanged by hand shaking and verifies data by deciphering information exchanged during cipher communication. More specifically, during hand shaking between the data providing system and data requesting system, the data verifying system transfers information between both the systems. During this information transfer, the data verifying system stores random numbers transmitted from both the systems in its storage area. The enciphered numerical value transmitted from the data requesting system to the data providing system is deciphered by using the private key of a data transfer system in the data verifying system and stored in the storage area. By using these two random numbers and the deciphered numerical value, the data verifying system calculates the cipher key to be used for cipher communication by using a method stipulated by SSL.

These values may be stored in correspondence with a session ID for identifying a communication session. After the cipher key to be used for cipher communication is calculated, information other than the cipher key in the storage area may be discarded. The details of hand shaking communication, SSL processes and relation to a session ID are well known by those skilled in the art.

Similar to the processes of the data requesting system, the data requesting system and data providing system calculate cipher keys to use them for ciphering and enciphering during cipher communications.

The data verifying system deciphers ciphered information by using the calculated cipher key to perform the verification process. By deciphering the information received at the request reception step, URL of requested data is acquired. At the request transmission step, the data verifying system transmits the enciphered request received from the data requesting system to the data providing system.

At the data reception step, the data verifying system receives the enciphered data transmitted from he data providing system. At the data verification step, the data verifying system deciphers the received data, and verifies it to judge the validity of the data.

When the data is transmitted at the data transmission step, the enciphered data received from the data providing system is transmitted to the data requesting system.

If the validity of the data cannot be confirmed at the data verification step and predetermined data replaced with the data is to be transmitted to the data requesting system, or if an HTTP status indicating that the data cannot be transmitted is to be transmitted, the predetermined data or HTTP status enciphered by the cipher key is transmitted.

A combination of any embodiments may be used.

According to the invention, falsified data and secret data are prevented from being presented to a data requesting system.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A data verifying method for a data verifying system for verifying data to be transmitted from a data providing system in response to a request, the method comprising:
a request receiving step (302) of receiving a data request including an identifier of the data from a data requesting system;
a verification data acquiring step (303) of acquiring verification data in accordance with the identifier;
a request transmitting step (304) of transmitting a supply request for the requested data to the data providing system in response to the received request;
a data receiving step (307) of receiving the supplied data transmitted from the data providing system in response to the supply request;
a data verifying step (308) of verifying the supplied data received at said data receiving step in accordance with the verification data; and
a data transmission controlling step (309) of controlling data transmission to the data requesting system in accordance with a verification result at said data verifying step.

2. A data verifying method according to claim 1, wherein the verification data acquired in accordance with the identifier contains data capable of verifying that the supplied data was not falsified.

3. A data verifying method according to claim 1, wherein:
said data verifying step (308) is a step of judging whether the supplied data is the requested data; and
said data transmission controlling step (309) includes a step of transmitting the supplied data if the verification result indicates that the supplied data is the requested data, and not transmitting the supplied data if the verification result indicates that the supplied data is different from the requested data.

4. A data verifying method according to claim 3, wherein said data transmitting step (309) further comprises:
a step of transmitting notice data for notifying that the requested data cannot be transmitted, if the verification result indicates that the supplied data is different from the requested data.

5. A data verifying method according to claim 3, wherein said data transmitting step (309) further comprises:
a step of transmitting substitute data for the requested data, if the verification result indicates that the supplied data is different from the requested data.

6. A data verifying method according to claim 1, wherein the verification data contains information for verifying related data to be verified along with the supplied data to be transmitted and corresponding to the identifier.

7. A data verifying method according to claim 6, wherein:
said data receiving step (307) further comprises a related data acquiring step of receiving the related data to be verified along with the supplied data from the data providing system;
said data verifying step (308) further comprises a step of verifying the related data in accordance with the verification data; and
said data transmission controlling step (309) includes a step of transmitting the supplied data if the related data is data to be acquired as the related data, and not transmitting the supplied data if the related data is different from data to be acquired as the related data.

8. A data verifying method according to claim 1, wherein the supplied data received from the data providing system is stored in correspondence with the identifier.

9. A data verifying method according to claim 3, wherein the supplied data is stored in correspondence with the identifier, if the verification result indicates that the supplied data is the requested data.

10. A data verifying method according to claim 9, wherein said request transmitting step is not executed if the stored supplied data satisfies a predetermined condition.

11. A data verifying method according to claim 7, wherein the related data is stored in correspondence with the identifier if the related data satisfies a predetermined condition.

12. A data verifying method according to claim 7, wherein said related data acquiring step is not executed if the stored related data satisfies a predetermined condition.

13. A data verifying method according to claim 1, wherein said data verifying step (308) verifies the supplied data processed in a predetermined manner.

14. A data verifying method according to claim 13, wherein the supplied data processed in a predetermined manner has a predetermined portion of the supplied data removed.

15. A data verifying method according to claim 1, wherein a communication protocol for the data requesting system is different from a communication protocol for the data providing system.

16. A data verifying method according to claim 1, wherein if data to be transmitted from the data providing system to the data requesting system is to be enciphered, the data verifying system is provided with information necessary for cryptography possessed by the data providing system, and the data verifying system deciphers the enciphered and transmitted data in accordance with the information necessary for cryptography and verifies the deciphered data.

17. A data verifying method according to claim 16, wherein the information necessary for cryptography is a cipher key.

18. A data verifying method according to claim 17, wherein the cipher key is a private key of public key cryptography.

19. A data verifying method according to claim 17, wherein:
the information necessary for cryptography is exchanged between the data requesting system and the data providing system;
during the information exchange, the data requesting system enciphers at least one piece of the information necessary for cryptography by using the cipher key of the data providing system and transmitting the enciphered information;
the data verifying system deciphers the enciphered and transmitted information by using the cipher key provided to the data verifying system and stores the deciphered information; and
data enciphered and transmitted thereafter is deciphered by the stored deciphered information.

20. A data verifying method according to claim 16, wherein if the verification result indicates that the supplied data is the requested data, the enciphered supplied data transmitted from the data providing system is transmitted to the data requesting system.

21. A data verifying method according to claim 16, wherein if the verification result indicates that the supplied data is different from the requested data, notice data for notifying that the requested data cannot be transmitted is enciphered in accordance with the information necessary for cryptography and transmitted.

22. A data verifying method according to claim 16, wherein if the verification result indicates that the supplied data is different from the requested data,
substitute data for the requested data is enciphered in accordance with the information necessary for cryptography and transmitted.

23. A data verifying system for verifying data to be transmitted from a data providing system in response to a request, comprising:
request receiving means for receiving a data request including an identifier of the data from a data requesting system;
verification data acquiring means for acquiring verification data in accordance with the identifier;
request transmitting means for transmitting a supply request for the requested data to the data providing system in response to the received request;
data receiving means for receiving the supplied data transmitted from the data providing system in response to the supply request;
data verifying means for verifying the supplied data received by said data receiving means in accordance with the verification data; and
data transmission controlling means for controlling data transmission to the data requesting system in accordance with a verification result by said data verifying means.

24. A data verifying program for verifying data to be transmitted from a data providing system in response to a request, the program being read and executed by a computer to configure means for executing following steps on the computer, the steps comprising:
a request receiving step of receiving a data request including an identifier of the data from a data requesting system;
a verification data acquiring step of acquiring verification data in accordance with the identifier;
a request transmitting step of transmitting a supply request for the requested data to the data providing system in response to the received request;
a data receiving step of receiving the supplied data transmitted from the data providing system in response to the supply request;
a data verifying step of verifying the supplied data received at said data receiving step in accordance with the verification data; and
a data transmission controlling step of controlling data transmission to the data requesting system in accordance with a verification result at said data verifying step.
